# EUROPEAN PATENT APPLICATION

(11) **EP 3 335 604 A1**
(43) Date of publication of application: **20.06.2018**
(21) Application number: 16204997.7
(22) Date of filing: 19.12.2016
(51) Int. Cl.: A47J 43/07

(54) **A MIXING ATTACHMENT FOR MIXING JUG**

(71) Applicant: BSH Hausgeräte GmbH, 81739 München (DE)
(72) Inventor: Berzelak, Matej, 3333 Ljubno (SI); Kovacec, Bostjan, 1420 Trbovlje (SI); Enci, David, 3331 Nazarje (SI)

(57) **Abstract**

A blender jug (10) comprising a motor driven food processing tool (12) arranged at the bottom of the blender jug (10) to use the blender jug in a first operation mode wherein a mixing attachment (20) adapted to be fastened on the food processing tool (12) to use the blender jug (20) in a second operation mode is provided.

The present invention provides a simple, efficient and easy to use mixing attachment for preparing homogenise and good quality sauces, especially mayonnaise. The time for preparing sauce with use of such attachment is greatly reduced.

## Description

### FIELD OF THE INVENTION

The present invention relates to a blender jug comprising a motor driven food processing tool arranged at the bottom of the blender jug.

### STATE OF THE ART

Blenders typically include a motorised base onto which a blender jug is detachably mounted. A set of blades is fitted rotatably to the base of the jug. The motorised base may include a controller with and interface providing a user with a selection of blending options. A speed control is also typically provided. This allows the user to carry out a wide range of blending operations for various recipes. Most mixers do not readily blend small amounts of substances such as mayonnaise.

The EP 1 011 402 B1 discloses a food mixer which includes a container having an impeller rotatable about an axis of rotation by drive means adjacent the lower surface of the container and which impeller cooperates with a mixing devices; wherein the impeller is selectably rotatable in both a clockwise and an anti-clockwise direction, wherein the impeller is arranged to produce by its rotation axial movement o the mixing device along the rotational axis of the impeller.

The mixing devices presented in the state of the art equipped with the rotatable tools are designed to process different kind of food but any of them have the additional tools dedicated to prepare homogenous sauces like e.g. mayonnaise or the like. In the presented solutions only one mode of operation is possible.

### THE AIM OF THE INVENTION

It is the object of the present invention to provide a simple, efficient and easy to use tool for preparing homogenise mixtures, especially mayonnaise.

### SUMMARY OF THE INVENTION

In order to achieve the objective mentioned above, the present invention provides a mixing attachment for mixing jug where the mixing attachment is adapted to be fastened on the food processing tool to use the blender jug in a second operation mode. Constructions and further developments which can be applied separately or in combination with each other are set forth in the dependent claims.

It is to be understood that both the foregoing general description and the following detailed description are exemplary, and are intended to provide further explanation of the invention as claimed. Other advantages and features of the invention will be apparent from the following description, drawings and claims.

According to the invention the mixing attachment is adapted to be fastened on the food processing tool to use the blender jug in a second operation mode.
The mixing attachment is a disc shaped rotatable tool made out of plastic. It is designed to be easy fastened on the food processing tool e.g. a knife. The food processing tool are placed at the bottom of the mixing jug. The mixing attachment is fastened on the food processing tool what means that the mixing attachment is connected with the food processing tool during processing. The working surface of the mixing attachment is designed to provide efficient process of making sauces of good quality. Disengagement of the mixing attachment and the food processing tool can be performed easily. Moreover, cleaning of such mixing attachment is uncomplicated and can be carry out by using the stream of water from the tap.
Therefore a simple, efficient and inexpensive and easy to use mixing attachment for preparing homogenise sauces, especially mayonnaise is provided.

### PREFERED EMBODIMENT OF THE INVENTION

In the preferred embodiment of the invention a bottom surface of the mixing attachment has a recess for receiving the food processing tool of the blender jug e.g. a knife.
The concave shape of the bottom surface of the mixing attachment is designed in such a way that it has the recess which shape is designed to match to the shape of the food processing tool. It means that mixing attachment and food processing tool fits to each other perfectly. The mixing attachment is pushed on the knife until it is locked. The way of connecting the mixing attachment to the food processing tool is intuitive and easy for users.
The mixing attachment is equipped with working ribs which are positioned on an upper surface and on a side surface of the mixing attachment. The working ribs are arranged in a circular pattern and are positioned perpendicularly to the direction of the rotation of the tools.
In a favourable embodiment of the invention the working ribs are arranged between every 15° - 180°, especially by every 30° - 90°, preferably of 60°. It was found during tests that optimum angle between working ribs is 60°. The shape of the mixing attachment, the distance between working ribs and its number are designed on the basis of the laboratory tests results.
Favourable, the height of the working ribs changes depending on the distance from the center of the mixing attachment. The height increases from the central point of the mixing attachment towards the side surface. In the preferred embodiment of the invention the height of the working ribs is constant or the height decreases from the central point of the mixing attachment towards the side surface. Favourable, the attachment is a disc without working ribs. The mixing attachment can be produced with different sizes of the disc and working ribs. Additionally it can be designed to fit different kinds of working tools.

The present invention provides a simple, efficient and easy to use mixing attachment for preparing homogenise and good quality sauces, especially mayonnaise. The time for preparing sauce with use of such attachment is greatly reduced.

### BRIEF DESCRIPTION OF THE FIGURES

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
- Fig. 1: shows a cross section of the blender jug with the food processing tool and the mixing attachment;
- Fig. 2: is a schematic view of the mixing attachment in a top view;
- Fig. 3: shows cross sectional view of the mixing attachment;

### DETAIL DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical or comparable components.

A blender typically comprises a motorised base onto which the blender jug is mounted. When the blender jug is mounted onto the base, the food processing tool is driven by the driving means of the motor.

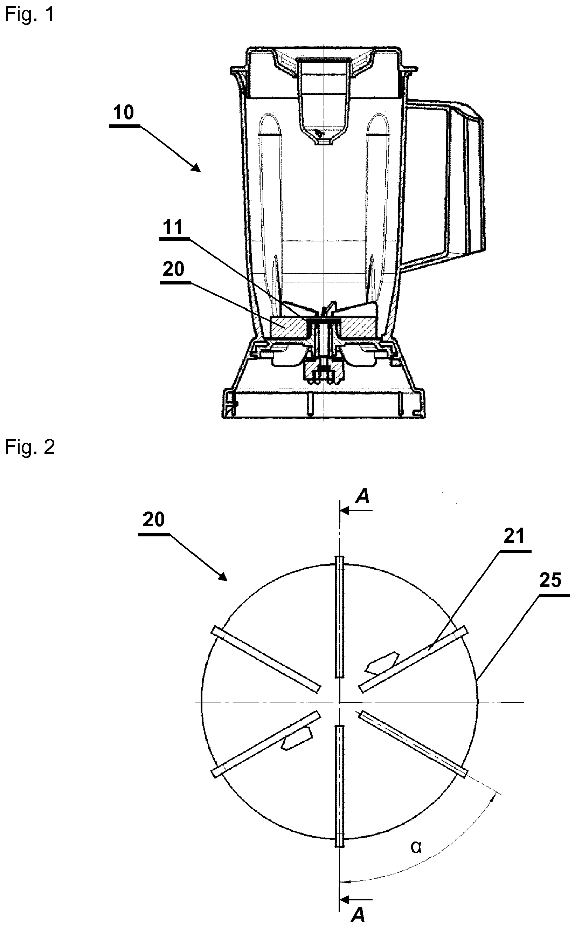

Reference is made to Fig. 1 which shows a cross section of the blender jug 10 with the food processing tool 11 and the mixing attachment 20. The blender jug 10 is made out of glass which features allow it to be used for blending purposes so impact, wear and temperature resistant. The blender jug 10 is placed on the base in which the motor for actuating different working tools is provided. The drive is transmitted from the motor to the working tool by a driving shaft. The food processing tool 11 is placed at the bottom of the blender jug 10 and it is driven by driving shaft of the motor. The mixing attachment 20 is snapped onto the food processing tool 11 and it is ready to use in the second operation mode which allows to prepare mayonnaise through rotation of the mixing attachment 20. The main function of the mixing attachment 20 is to prepare sauces but not only. The mixing attachment 20 fulfils also a protective function during storage of the blender. The edges of the food processing tool 11 are sharp to making blending easy and efficient. The user can hurt easily during preparing the blender to storing. The protection of the user before hurting is done when the mixing attachment 20 is fixed onto the food processing tool 11. Demounting of the mixing attachment 20 from the working tool 11 is easy and can be done without using much force. The mixing attachment 20 is made out of plastic that is why the mixing attachment edges are not sharp so the user is protected.

Fig. 2 is a schematic view of the mixing attachment 20. The mixing attachment 20 is a disc shape element which is attached to the food processing tool 11. The mixing attachment 20 rotates together with the food processing tool 11. The upper surface 24 and the side surface of the mixing attachment 20 is equipped with the plurality of working ribs 21 which start at the lower surface 23 of the mixing attachment 20 and extend thru side surface 25 to upper surface 24 and end short of the middle of the disc. Number and placement of working ribs 21 was adjusted on the basis of laboratory tests results. Working ribs 21 creates a circular pattern and the angle between working ribs α=30°. The working ribs 21 are designed to mix the ingredients and to collect processed food from the walls of the blender jug 10. Another function of the working ribs 21 is that they are a grip for the user helping to assemble or disassemble the mixing attachment 20 with the food processing tool 11.

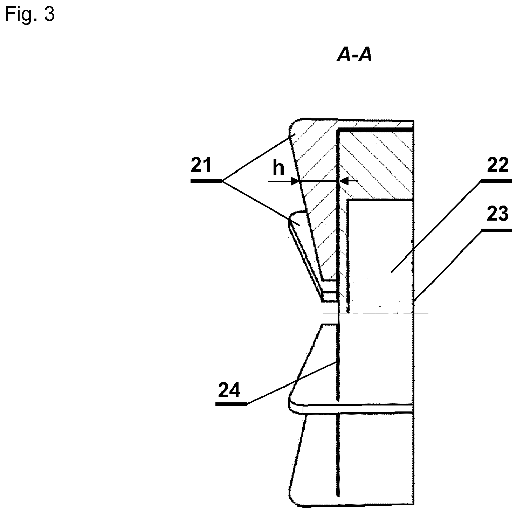

Fig. 3 shows cross sectional view of the mixing attachment 20. The lower surface of the mixing attachment 20 has a recess 22 for receiving the food processing tool 11. The shape of the recess 22 is designed in such a way that it matches to the food processing tool 11 e.g. a knife. The mixing attachment 20 is press fit onto the food processing tool 11 and the connection is tight enough to provide a secure connection of this two elements during preparing mayonnaise. Working ribs 21 elongate from the side surface 25 of the mixing attachment 20 thru the upper surface 24 where the part of the working ribs 21 placed on the side surface helps to collect processed food from the walls of the mixing jug 10.

### LIST OF REFERENCE SIGNS

- 10: blender jug
- 11: food processing tool

- 20: mixing attachment
- 21: working rib
- 22: recess
- 23: bottom surface
- 24: upper surface
- 25: side surface

- α: angle between working ribs of the mixing accessory
- h: height of the working rib

## Claims

1. A blender jug (10) comprising a motor driven food processing tool (12) arranged at the bottom of the blender jug (10) to use the blender jug in a first operation mode **characterized by** a mixing attachment (20) adapted to be fastened on the food processing tool (12) to use the blender jug (20) in a second operation mode.

2. The blender jug (10) according to any of preceding claims **characterized in that** a bottom surface (23) of the mixing attachment (20) has a recess (22) for receiving the food processing tool (12) of the blender jug (10).

3. The blender jug (10) according to claim 2 **characterized in that** the recess (22) of the bottom surface (23) of the mixing attachment (20) is cross shaped.

4. The blender jug (10) according to any of preceding claims **characterized in that** the mixing attachment (20) is fixed to the food processing tool (11) by press fit.

5. The blender jug (10) according to any of preceding claims **characterized in that** working ribs (21) are positioned on an upper surface (24) of the mixing attachment (20).

6. The blender jug (10) according to claim 5 **characterized in that** the working ribs (21) are arranged in a circular pattern.

7. The blender jug (10) according to claim 6 **characterized in that** the working ribs (21) are arranged between every 15° - 180°, especially by every 30° - 90°, preferably of 60°.

8. The blender jug (10) according to any of preceding claims **characterized in that** the height (h) of the working rib (21) changes depending on the distance from the center of the mixing attachment (20).

9. The blender jug (10) according to any of preceding claims **characterized in that** the mixing attachment (20) is a protection device for protecting the user and food processing tool (11).
